(19) Europäisches Patentamt
European Patent Office
Office européen des brevets

(11) **EP 2 477 321 A2**

(12) **EUROPÄISCHE PATENTANMELDUNG**

(43) Veröffentlichungstag:
**18.07.2012 Patentblatt 2012/29**

(51) Int Cl.:
***H02M 5/257*** *(2006.01)*

(21) Anmeldenummer: **11195497.0**

(22) Anmeldetag: **23.12.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **13.01.2011 DE 102011002657**

(71) Anmelder: **Converteam GmbH**
**12277 Berlin (DE)**

(72) Erfinder:
• **Böcker, Joachim Prof.Dr.Ing.**
**12347 Berlin (DE)**
• **Lönneker, Michael**
**33100 Paderborn (DE)**

(74) Vertreter: **Dreiss**
**Patentanwälte**
**Gerokstraße 1**
**70188 Stuttgart (DE)**

(54) **Verfahren zum Betreiben eines Umrichters einer Anordnung zur Erzeugung elektrischer Energie**

(57) Es wird ein Verfahren zum Betreiben eines Umrichters (14) einer Anordnung (10) zur Erzeugung elektrischer Energie beschrieben. Die Anordnung (10) weist einen Generator (12) auf, der mit dem Umrichter (14) verbunden ist, der seinerseits mit einem Energieversorgungsnetz (16) gekoppelt ist, wobei die Frequenz der von dem Generator (12) erzeugten Spannung veränderlich ist, und wobei mit dem Umrichter (14) eine Mehrzahl von unterschiedlichen Schalterstellungen realisierbar ist. Bei dem Verfahren wird die Ausgangsspannung des Umrichters (14) in ein d, q Koordinatensystem umgewandelt, wobei das d, q Koordinatensystem der Frequenz der Spannung des Energieversorgungsnetzes (16) zugeordnet ist. Weiterhin wird in dem d, q Koordinatensystem ein Sollwert vorgegeben, es werden aus der Ausgangsspannung in dem d, q Koordinatensystem für unterschiedliche Schalterstellungen des Umrichters (14) mehrere Augenblicks- oder Zukunftswerte ermittelt, es werden in dem d, q Koordinatensystem Abweichungen zwischen dem Sollwert und den Augenblicks- oder Zukunftswerten ermittelt, und es wird der Umrichter (14) in Abhängigkeit von den Abweichungen in eine der Schalterstellungen geschaltet.

Fig. 2

**Beschreibung**

Die Erfindung betrifft ein Verfahren zum Betreiben eines Umrichters einer Anordnung zur Erzeugung elektrischer Energie. Die Erfindung betrifft ebenfalls eine entsprechende Anordnung zur Erzeugung elektrischer Energie.

Eine derartige Anordnung weist einen Generator auf, der mit einem Umrichter verbunden ist, der seinerseits mit einem Energieversorgungsnetz gekoppelt ist. Die Frequenz der von dem Generator erzeugten Spannung ist veränderlich. Mit dem Umrichter kann eine Mehrzahl von unterschiedlichen Schalterstellungen realisiert werden.

Diese Anordnung kann dazu verwendet werden, einen Energieerzeuger, beispielsweise eine Windkraftanlage, mit einem öffentlichen Drehstromnetz zu verbinden. Die Windkraftanlage treibt dabei den Generator mit einer veränderlichen Drehzahl an. Die Frequenz der von dem Generator erzeugten Spannung ist damit ebenfalls veränderlich und muss an die im Wesentlichen konstante Frequenz des Drehstromnetzes angepasst werden. Dies wird mit Hilfe des Umrichters erreicht. Hierzu sind eine Vielzahl von Steuerungen und/oder Regelungen für den Umrichter bekannt.

Aufgabe der Erfindung ist es, ein Verfahren zum Betreiben des Umrichters der Anordnung zu schaffen, das im Vergleich zum Stand der Technik eine verbesserte Steuerung und/oder Regelung ermöglicht.

Die Erfindung löst diese Aufgabe durch ein Verfahren nach dem Anspruch 1 sowie durch eine Anordnung nach dem Anspruch 16.

Bei der Erfindung wird die Ausgangsspannung des Umrichters in ein d, q Koordinatensystem umgewandelt, wobei das d, q Koordinatensystem der Frequenz der Spannung des Energieversorgungsnetzes zugeordnet ist. In dem d, q Koordinatensystem wird ein Sollwert vorgegeben. Weiterhin werden aus der Ausgangsspannung in dem d, q Koordinatensystem für unterschiedliche Schalterstellungen des Umrichters mehrere Augenblicks- oder Zukunftswerte ermittelt. Dann werden in dem d, q Koordinatensystem Abweichungen zwischen dem Sollwert und den Augenblicks- oder Zukunftswerten ermittelt. Und dann wird der Umrichter in Abhängigkeit von den Abweichungen in eine der Schalterstellungen geschaltet.

Erfindungsgemäß wird die Steuerung oder Regelung des Umrichters im d, q Koordinatensystem vorgenommen. Dieses d, q Koordinatensystem "dreht sich" dabei mit dem Energieversorgungsnetz mit. Damit erfordert die Ermittlung der für die Steuerung oder Regelung erforderlichen Größen wesentlich weniger Aufwand als beim Stand der Technik. Insbesondere stellt der Sollwert in dem d, q Koordinatensystem einen feststehenden Punkt dar, der in einfacher Weise mit den berechneten Augenblicks- oder Zukunftswerten vergleichbar ist. Die entstehenden Abweichungen werden dann als Grundlage für die Ansteuerung des Umrichters herangezogen.

Bevorzugt wird die Ausgangsspannung des Umrichters zuerst in ein α, β Koordinatensystem und dann in ein d, q Koordinatensystem umgewandelt. Dies stellt eine besonders einfache Möglichkeit dar, die Ausgangsspannung aus dem üblicherweise vorhandenen r, s, t Koordinatensystem über das α, β Koordinatensystem in das d, q Koordinatensystem umzuwandeln.

Bei einer Ausgestaltung der Erfindung handelt es sich bei dem Sollwert um eine Soll-Ausgangsspannung und bei den Augenblickswerten um Trajektorien der zu den Schalterstellungen des Umrichters zugehörigen Ausgangsspannungen. In diesem Fall wird durch die Erfindung eine Spannungsmodulation realisiert.

Besonders vorteilhaft ist es dabei, wenn diejenige Trajektorie ermittelt wird, die der Soll-Ausgangsspannung am Nächsten kommt, und wenn der Umrichter in diejenige Schalterstellung geschaltet wird, mit der diejenige Ausgangsspannung erzeugt werden kann, die der nächstkommenden Trajektorie zugeordnet ist. Dies stellt eine besonders einfache Art und Weise dar, die genannte Spannungsmodulation zu realisieren.

Bei einer Ausgestaltung der Erfindung handelt es sich bei dem Sollwert um einen Soll-Ausgangsstrom und bei den Zukunftswerten um zukünftige Ausgangsströme für unterschiedliche Schalterstellungen des Umrichters. In diesem Fall wird durch die Erfindung eine erste Variante einer Stromregelung realisiert.

Dabei ist es besonders vorteilhaft, wenn derjenige zukünftige Ausgangsstrom ermittelt wird, der dem Soll-Ausgangsstrom am Nächsten kommt, und wenn der Umrichter in diejenige Schalterstellung geschaltet wird, mit der diejenige Ausgangsspannung erzeugt werden kann, die dem nächstkommenden zukünftigen Ausgangsstrom zugeordnet ist.

Bei einer Ausgestaltung der Erfindung handelt es sich bei dem Sollwert um einen Soll-Ausgangsstrom und bei den Augenblickswerten um Ableitungen eines Ausgangsstroms für unterschiedliche Schalterstellungen des Umrichters. In diesem Fall handelt es sich um eine zweite Variante einer Stromregelung.

Dabei ist es besonders zweckmäßig, wenn diejenige Schalterstellung ausgewählt wird, deren Zeiger der Ableitung dem Soll-Ausgangsstrom am Nächsten kommt, und wenn der Umrichter in diejenige Schalterstellung geschaltet wird, mit der diejenige Ausgangsspannung erzeugt werden kann, die der nächstkommenden Ableitung des Ausgangsstroms zugeordnet ist.

Bei den vorgenannten Ausgestaltungen der Erfindung ist es besonders vorteilhaft, wenn der Sollwert in Abhängigkeit von dem Energieversorgungsnetz vorgegeben wird. Auf diese Weise kann die von dem Generator erzeugte Spannung an die Spannung des Energieversorgungsnetzes angepasst werden.

Weitere Merkmale, Anwendungsmöglichkeiten und Vorteile der Erfindung ergeben sich aus der nachfolgenden Beschreibung von Ausführungsbeispielen der Erfindung, die in Figuren dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in den Figuren.

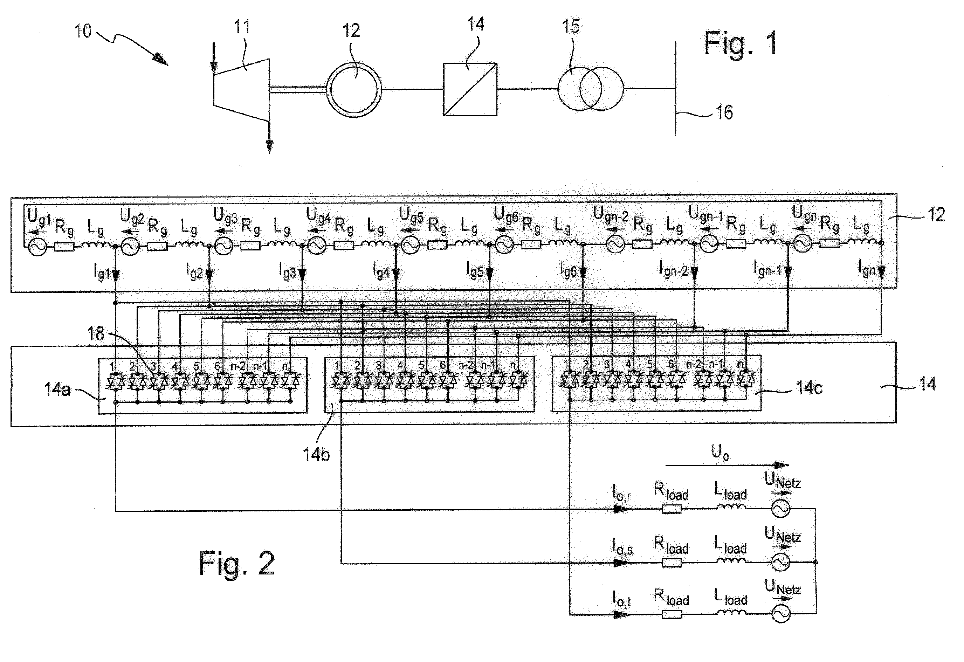

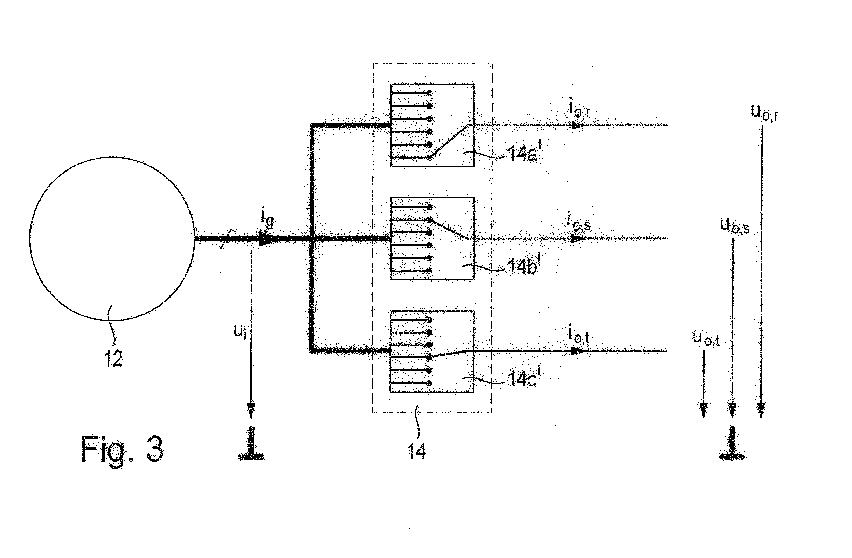

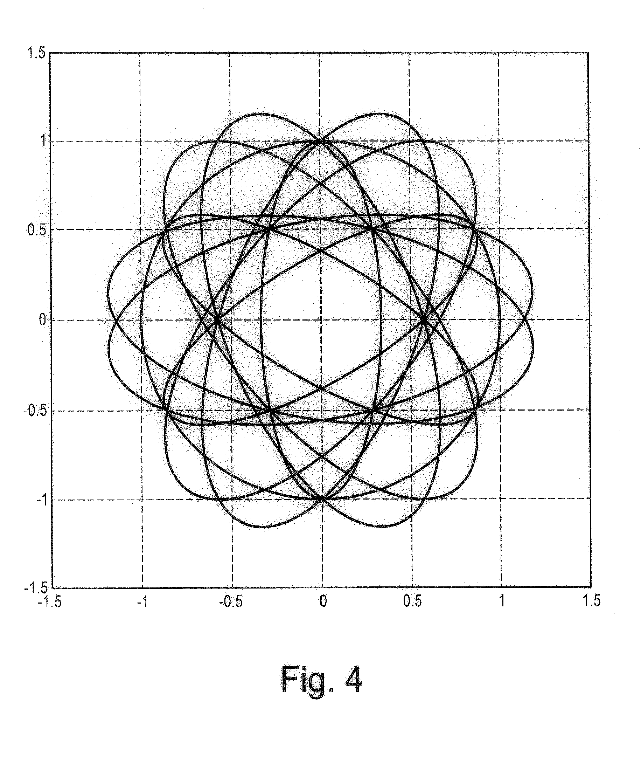

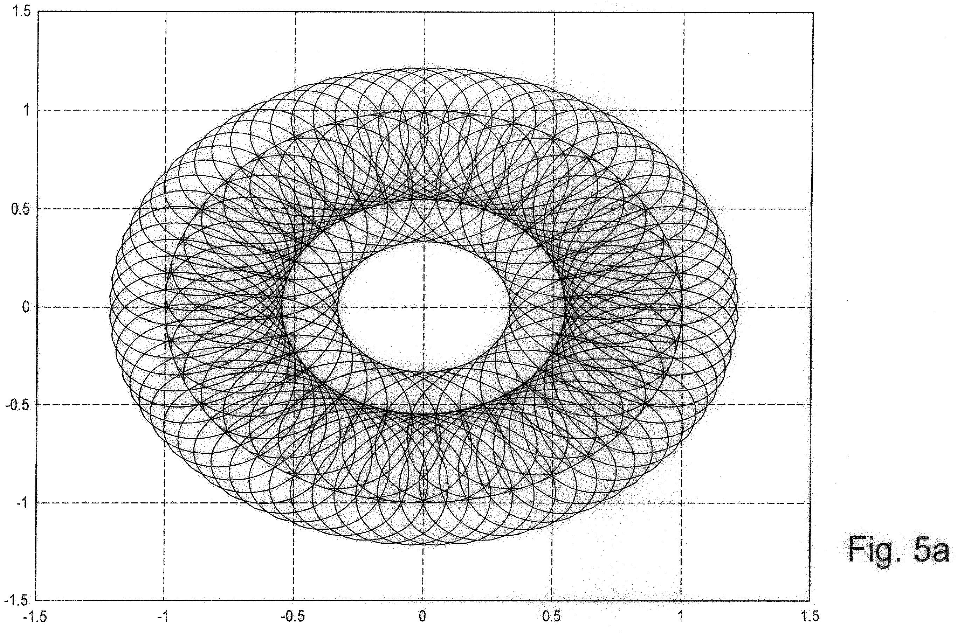

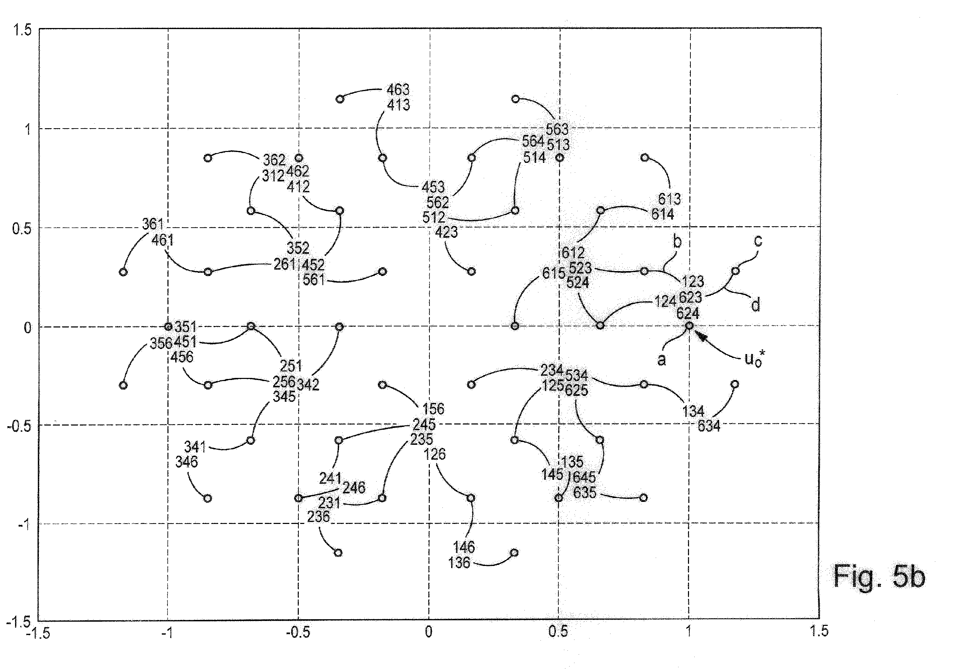

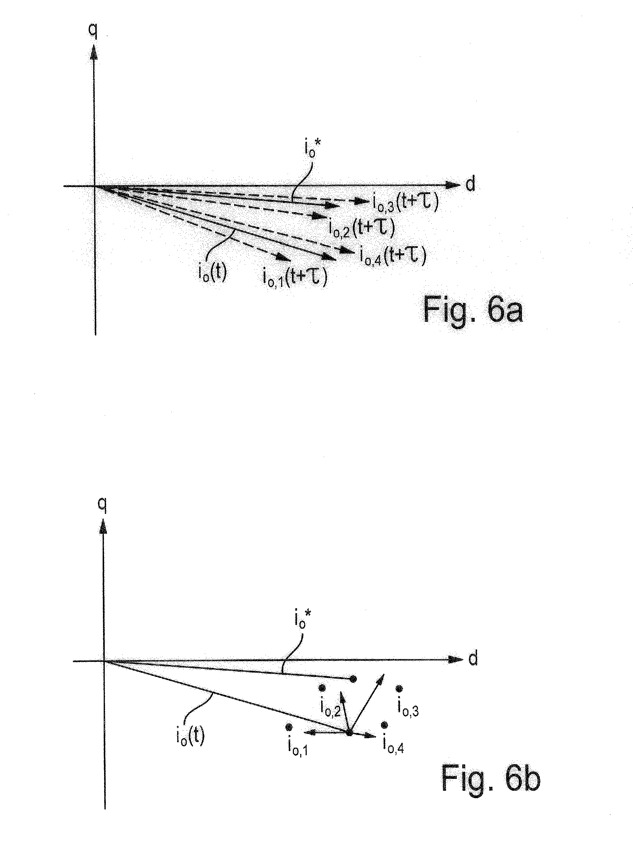

Die Figur 1 zeigt ein schematisches Blockschaltbild eines Ausführungsbeispiels einer Anordnung zur Erzeugung elektrischer Energie, die Figuren 2 und 3 zeigen ein schematisches Schaltbild und ein vereinfachtes Blockschaltbild von Teilen der Anordnung der Figur 1, die Figur 4 zeigt ein schematisches Diagramm von Ausgangsspannungen der Schaltung der Figur 3 in einem $\alpha$, $\beta$ Koordinatensystem, die Figuren 5a, 5b zeigen ein schematisches Diagramm von Ausgangsspannungen der Schaltung der Figur 3 und einen Ausschnitt davon jeweils in einem d, q Koordinatensystem, und die Figuren 6a, 6b zeigen schematische Zeigerdiagramme von Strömen der Schaltung der Figur 3 jeweils in einem d, q Koordinatensystem.

In der Figur 1 ist eine Anordnung 10 zur Erzeugung und Wandlung elektrischer Energie dargestellt. Es ist ganz allgemein ein Energieerzeuger 11 vorhanden, der über eine mechanische Kopplung einen Generator 12 antreibt. Bei dem Energieerzeuger 11 kann es sich beispielsweise um eine Gas- oder Wasserkraftturbine oder dergleichen oder um eine Windkraftanlage handeln. Bei dem Generator 12 kann es sich insbesondere um einen Synchrongenerator handeln.

Der Generator 12 ist mit einem leistungselektronischen Umrichter 14 verbunden, der seinerseits über einen Transformator 15 mit einem elektrischen

Energieversorgungsnetz 16 verbunden ist. Bei dem Energieversorgungsnetz 16 kann es sich insbesondere um ein öffentliches Drehstromnetz mit einer Spannung von beispielsweise 110 kV und mit einer Frequenz von beispielsweise 50 Hz oder 60 Hz handeln.

Die von dem Energieerzeuger 11 mit Hilfe des Generators 12 erzeugte elektrische Energie wird über den Umrichter 14 und den Transformator 15 in das Energieversorgungsnetz 16 eingespeist.

Der Generator 12 wird von dem Energieerzeuger 11 mit einer Drehzahl angetrieben, die veränderliche Werte annehmen kann. So ist es beispielsweise bei einer Gasturbine möglich, dass die Drehzahl des Generators 12 auf unterschiedliche Werte eingestellt und damit an den jeweils aktuellen Wirkungsgrad der Gasturbine angepasst wird. Ebenfalls ist es insbesondere bei einer Windkraftanlage möglich, dass die Drehzahl des Generators 12 in einem vorgegebenen Bereich variabel ist.

In Abhängigkeit von der Drehzahl des Generators 12 kann die Frequenz der von dem Generator 12 abgegebenen Spannung einen einstellbaren Wert oder einen variablen Wert aufweisen. In entsprechender Weise kann auch die von dem Generator 12 abgegebene Spannung veränderlich sein. Es wird nachfolgend beispielhaft davon ausgegangen, dass die Frequenz der von dem Generator 12 abgegebenen Spannung größer ist als die Frequenz der Spannung des Energieversorgungsnetzes 16, wenngleich dies keine zwingende Voraussetzung ist.

In der Figur 2 sind der Generator 12 und der Umrichter 14 beispielhaft im Detail dargestellt. Bei dem Generator 12 handelt es sich um einen n-phasigen Generator, der beispielsweise in einem Polygon geschaltet sein kann, und bei dem Umrichter 14 handelt es sich um einen sogenannten Direkt-Umrichter oder Matrix-Umrichter (englisch: cyclo converter).

Jede Phase des Generators 12 weist eine Induktivität Lg, einen Widerstand Rg und eine induzierte Spannung $U_{g,1...n}$ auf. Jede Generatorphase ist nach außen geleitet und kann einen Strom $I_{g,1..n}$ führen. Der Umrichter 14 weist drei Gruppen 14a, 14b, 14c mit jeweils n antiparallel geschalteten Leistungshalbleiterbauelementen 18 auf. Die Parallelschaltungen von jeder der drei Gruppen 14a, 14b, 14c sind mit den Generatorphasen verbunden und werden im leitenden Zustand der Leistungshalbleiterbauelemente 18 von den Generatorströmen $I_{g,1..n}$ beaufschlagt.

Bei den Leistungshalbleiterbauelementen 18 kann es sich um fremdgeführte Ventile, beispielsweise IGBTs (IGBT = insulated gate bipolar transistor) oder IGCTs (IGCT = integrated gate commutated thyristor) handeln, die weitgehend freizügig umgeschaltet werden können. Alternativ kann es sich um fremdgeführte Thyristoren handeln, die nicht beliebig umgeschaltet werden können.

Von jeder der drei Gruppen 14a, 14b, 14c von Leistungshalbleiterbauelementen 18 führt eine Leitung zu dem Energieversorgungsnetz 16, das in der Figur 2 durch die Spannung $U_{Netz}$ dargestellt ist. In jeder dieser Leitungen sind beispielhaft eine ohmsche Last $R_{load}$ und eine induktive Last $L_{load}$ dargestellt, die insbesondere die Spannungsabfälle an dem Transformator 15 und an den Leitungen repräsentieren.

In nicht-dargestellter Weise ist der Anordnung 10 der Figur 1 ein elektronisches Steuergerät, beispielsweise ein Computer oder eine Rechenanlage oder dergleichen, zugeordnet. Diesem Steuergerät sind Betriebsgrößen des Generators 12, des Umrichters 13 und gegebenenfalls auch des Energieversorgungsnetzes 16 zugeführt. Weiterhin ist das Steuergerät mit den Leistungshalbleiterbauelementen 18 des Umrichters 14 verbunden und kann diese in einen leitenden oder sperrenden Zustand umschalten. Das Steuergerät kann mit einem Computerprogramm versehen sein, mit dem vorgegebene Verfahrensabläufe mit vorgegebenen Zuständen der Leistungshalbleiterbauelemente 18 ausgeführt werden können. Insbesondere ist das Steuergerät dazu geeignet, die nachfolgend beschriebenen Verfahren auszuführen. Damit ist es möglich, die Leistungshalbleiterbauelemente 18 des Umrichters 14 auf eine Art und Weise zu beeinflussen, wie dies nachfolgend beschrieben ist.

In der Figur 3 ist der Generator 12 beispielhaft als sechsphasiger Generator ausgebildet, es gilt n = 6. Der Umrichter 14 weist drei Gruppen mit jeweils sechs antiparallel geschalteten Leistungshalbleiterbauelementen auf. Dies ist in der Figur 3 in der idealisierten Form von drei Umschaltern 14a', 14b', 14c' mit jeweils sechs Schaltstellungen dargestellt.

Zur Vereinfachung werden nachfolgend die Induktivitäten Lg und die Widerstände Rg des Generators 12 vernachlässigt und es werden nur die induzierten Spannungen $U_{g,1...6}$ des Generators 12 berücksichtigt. Weiterhin wird beispielhaft ein sinusförmiger Verlauf der induzierten Spannungen $U_{g,1...6}$ angenommen.

Die induzierten Spannungen $U_{g,1...6}$ werden in Strangspannungen $u_{i,1...6}$ umgerechnet, die zu einem gemeinsamen virtuellen Sternpunkt gerichtet sind. Von jedem Umschalter 14a', 14b', 14c' wird eine der Strangspannungen $u_{i,1...6}$ an den Ausgang des Umrichters 14 weitergegeben und bildet dort eine von drei Phasen $u_{0,r}$, $u_{0,s}$, $u_{0,t}$ einer Ausgangsspannung $u_0$. Zu diesen Phasen der Ausgangsspannung $u_0$ gehören Ausgangsströme $i_{0,r}$, io,s, io,t eines Ausgangsstroms $i_0$.

Die drei idealisierten Umschalter 14a', 14b', 14c' können in dem vorliegenden Ausführungsbeispiel der Figur 3 insgesamt $6^3$ unterschiedliche Schaltstellungen einnehmen. Damit können durch eine entsprechende Ansteuerung der Umschalter 14a', 14b', 14c' insgesamt $6^3$ unterschiedlich zusammengesetzte Ausgangsspannungen $u_0$ erzeugt werden.

Jede der möglichen Ausgangsspannungen $u_0$ kann aus einer dreiphasigen Darstellung in r, s, t Koordinaten in eine Darstellung in $\alpha$, $\beta$ Koordinaten überführt werden. Diese Umwandlung kann beispielsweise mit Hilfe der sogenannten Clarke-Transformation durchgeführt werden. Die Umrechnung ist unabhängig von der Frequenz und der Spannung des Energieversorgungsnetzes 16 und kann beispielsweise auf der folgenden Gleichung basieren:

$$\begin{bmatrix} u_{0\alpha} \\ u_{0\beta} \end{bmatrix} = \frac{2}{3} \begin{bmatrix} 1 & \frac{-1}{2} & \frac{-1}{2} \\ 0 & \frac{\sqrt{3}}{2} & \frac{-\sqrt{3}}{2} \end{bmatrix} \begin{bmatrix} u_{0r} \\ u_{0s} \\ u_{0t} \end{bmatrix}$$

In der Figur 4 sind eine Anzahl von Ausgangsspannungen $u_0$ in einem $\alpha$, $\beta$ Koordinatensystem dargestellt. Diese Ausgangsspannungen $u_0$ sind auch bei einer gleichbleibenden Schaltstellung der drei Umschalter 14a', 14b', 14c' nicht konstant, sondern bilden sogenannte Trajektorien. Bei derartigen Trajektorien handelt es sich um den Verlauf der Spannungsvektoren der Ausgangsspannungen $u_0$ um den Nullpunkt. In der Figur 4 sind die Trajektorien beispielhaft innerhalb einer elektrischen Periode von 360 Grad des Generators 12 dargestellt. Weiterhin ist in der Figur 4 nur eine beispielhaft ausgewählte Anzahl von Trajektorien dargestellt. Insbesondere sind nur solche Trajektorien von Ausgangsspannungen $u_0$ gezeigt, deren zugehörige Spannungsvektoren sich entgegen dem Uhrzeigersinn drehen.

Es wird nachfolgend beispielhaft davon ausgegangen, dass die von dem Generator 12 abgegebene Spannung eine Frequenz von 60 Hz besitzt. Damit rotieren die Spannungsvektoren der Trajektorien der Figur 4 mit dieser Frequenz von 60 Hz.

Es werden nunmehr die Ausgangsspannungen $u_0$ aus dem $\alpha$, $\beta$ Koordinatensystem der Figur 4 in ein d, q Koordinatensystem überführt. Diese Umwandlung kann beispielsweise mit Hilfe der sogenannten Park-Transformation durchgeführt werden. Die Umrechnung ist dabei abhängig von der Frequenz der Spannung des Energieversorgungsnetzes 16 und kann beispielsweise auf der folgenden Gleichung basieren:

$$\begin{bmatrix} u_{0d} \\ u_{0q} \end{bmatrix} = \begin{bmatrix} \cos(\Phi) & \sin(\Phi) \\ -\sin(\Phi) & \cos(\Phi) \end{bmatrix} \begin{bmatrix} u_{0\alpha} \\ u_{0\beta} \end{bmatrix}$$

Für den Winkel $\Phi$ gilt dabei: $\Phi = 2\pi * t / f_{Netz}$, mit t = Zeit und $f_{Netz}$ = Frequenz der Spannung des Energieversorgungsnetzes 16.

Das d, q Koordinatensystem der Figur 4 ist der Frequenz $f_{Netz}$ der Spannung $U_{Netz}$ des Energieversorgungsnetzes 16 zugeordnet und "dreht sich" somit mit dieser Frequenz $f_{Netz}$.

In der Figur 5a sind eine Anzahl von Ausgangsspannungen $u_0$ in einem d, q Koordinatensystem dargestellt. Diese Ausgangsspannungen $u_0$ ergeben sich dabei durch die vorstehend erläuterte Umwandlung von dem $\alpha$, $\beta$ Koordinatensystem in das d, q Koordinatensystem. Die Ausgangsspannungen $u_0$ sind auch in dem d, q Koordinatensystem nicht konstant, sondern bilden wiederum Trajektorien. In der Figur 5a sind die Trajektorien beispielhaft über eine elektrische Periode von 2160 Grad des Generators 12 dargestellt. Aufgrund des beispielhaft gewählten Frequenzverhältnisses von 60 Hz für die Spannung des Generators 12 und 50 Hz für die Spannung des Energieversorgungsnetzes 16 entspricht dies einer elektrischen Periode von 1800 Grad des Energieversorgungsnetzes 16. Damit rotieren die Spannungsvektoren der Trajektorien der Figur 5a mit einer Winkelgeschwindigkeit von 2n * 10 Hz.

In der Figur 5b ist ein Ausschnitt aus der Figur 5a dargestellt. Bei der Figur 5b handelt es sich somit um ein d, q Koordinatensystem. Weiterhin handelt es sich in der Figur 5b um dieselben Trajektorien der Ausgangsspannungen $u_0$ wie in der Figur 5a, jedoch nur in einem Bereich von 24 Grad des Generators 12 bzw. 20 Grad des Energieversorgungsnetzes 16.

In der Figur 5b ist der Startpunkt jeder der Trajektorien mit einer "0" gekennzeichnet. Weiterhin ist zu jeder der Trajektorien eine aus drei Ziffern bestehende Zahlenkombination "xyz" angegeben. Diese Zahlenkombination gibt an, welche Schaltstellung die drei Umschalter 14a', 14b', 14c' bei der zugehörigen Trajektorie einnehmen. Da sechs Schaltstellungen pro Umschalter 14a', 14b', 14c' möglich sind, kann jede Zahl der Zahlkombination 3xyz" einen Wert zwischen 1 und 6 einnehmen. Die Zahlenkombination 3614" bedeutet beispielsweise, dass in dem ersten Umschalter 14a' nur der sechste Schalter leitend geschaltet ist, in dem zweiten Umschalter 14b' nur der erste Schalter leitend geschaltet ist, und in dem dritten Umschalter 14c' nur der vierte Schalter leitend geschaltet ist.

Ausgehend von dem Startpunkt "0" und in Abhängigkeit von der jeweiligen Zahlkombination "xyz" ist dann in der Figur 5b der zukünftige Verlauf der zugehörigen Trajektorie über den bereits erwähnten Bereich dargestellt.

Aus den Trajektorien der Figur 5b ist zu erkennen, dass die einzelnen Ausgangsspannungen $u_0$, wie bereits erwähnt wurde, nicht konstant sind, sondern sich mit dem Drehwinkel des Generators 12 bzw. des Energieversorgungsnetzes 16 verändern. Die Veränderungen der einzelnen Trajektorien sind dabei in Abhängigkeit von der Schalterstellungen der Umschalter 14a', 14b', 14c' in jeweils unterschiedliche Richtungen ausgebildet.

Es wird nunmehr eine Spannungsmodulation für die Ausgangsspannung $u_0$ beschrieben.

Für die Spannungsmodulation wird ein Sollwert $u_0^*$ für die Ausgangsspannung $u_0$ vorgegeben, der von dem Umrichter 14 ausgangsseitig abgegeben werden soll. Diese Soll-Ausgangsspannung $u_0^*$ weist die Frequenz des Energieversorgungsnetzes 16 auf und stellt in der Darstellung der Figur 5b einen festen Punkt dar, und zwar den Punkt (1|0) in dem dortigen d, q Koordinatensystem. Bei der Soll-Ausgangsspannung $u_0^*$ handelt es sich insbesondere um die Spannung am Einspeisepunkt, die sich aus der Spannung $U_{Netz}$ des Energieversorgungsnetzes 16, dem Spannungsabfall des Transformators 15 und dem Spannungsabfall der elektrischen Leitungen zusammensetzt. Die Spannung $U_{Netz}$ des Energieversorgungsnetzes 16 wird dabei als konstant angenommen. Der Umrichter 14 soll also letztlich aus den von dem Generator 12 gelieferten induzierten Spannungen die Spannung $U_{Netz}$ des Energieversorgungsnetzes 16 erzeugen.

Es wird nunmehr diejenige Trajektorie gesucht, die der Soll-Ausgangsspannung $u_0^*$ am Nächsten kommt. Im vorliegenden Beispielfall ist dies die Trajektorie mit der Zahlenkombination "624". Die Umschalter 14a', 14b', 14c' werden dann auf die zugehörigen Schalterstellungen eingestellt. Dies hat zur Folge, dass die zu der Zahlenkombination "624" zugehörige Ausgangsspannung $u_0$ von dem Umrichter 14 erzeugt wird. Die zu der Zahlenkombination "624" zugehörige Trajektorie beginnt dabei in dem Startpunkt a und bewegt sich entlang des Wegs b. Wie erläutert, weist die Trajektorie dieser Ausgangsspannung $u_0$ aktuell die geringste Abweichung von der Soll-Ausgangsspannung $u_0^*$ auf.

Unter der eingangs gemachten Annahme, dass die Frequenz des Generators 12 größer ist als die Frequenz des Energieversorgungsnetzes 16, verändern sich auch die berechneten Trajektorien der Ausgangsspannungen $u_0$. Die Trajektorien und damit auch die zugehörigen, von dem Umrichter 14 erzeugten Ausgangsspannungen $u_0$ sind deshalb, wie bereits erwähnt, nicht konstant. Dies bedeutet, dass sich die Abweichung der von dem Umrichter 14 erzeugten Ausgangsspannung $u_0$ von der Soll-Ausgangsspannung $u_0^*$ verändern kann, insbesondere vergrößern kann. Im vorliegenden Beispielfall vergrößert sich die Abweichung der Trajektorie mit der Zahlenkombination "624" von der Soll-Ausgangsspannung $u_0^*$ immer mehr entlang des Wegs b.

Es werden daher nach Ablauf einer vorgegebenen Zeitdauer, beispielsweise nachdem sich der Generator 12 bzw. das Energieversorgungsnetz 16 um einen vorgegebenen Drehwinkel weitergedreht hat, die vorstehend beschriebenen Schritte erneut durchgeführt. Dies bedeutet, dass die Trajektorien der Figur 5b für den neuen Zeitpunkt erneut berechnet werden. Dies ergibt dann eine neue Figur 5b mit neuen Trajektorien der Ausgangsspannungen $u_0$.

Anhand der neu berechneten Trajektorien wird dann wieder diejenige Trajektorie gesucht, die der Soll-Ausgangsspannung $u_0^*$ am Nächsten kommt. Es wird vorliegend angenommen, dass dies die Trajektorie mit der Zahlenkombination "623" wäre. Die Umschalter 14a', 14b', 14c' werden dann auf die zugehörigen Schalterstellungen eingestellt. Dies hat zur Folge, dass die zu der Zahlenkombination "623" zugehörige Ausgangsspannung $u_0$ von dem Umrichter 14 erzeugt wird. Die zu der Zahlenkombination "623" zugehörige Trajektorie beginnt dabei in dem Startpunkt c und bewegt sich entlang des Wegs d. Wie angenommen, weist diese Ausgangsspannung $u_0$ die für den neuen Zeitpunkt geringste Abweichung von der Soll-Ausgangsspannung $u_0^*$ auf.

Es wird darauf hingewiesen, dass in dem neuen Zeitpunkt auch die bisherige Trajektorie mit der Zahlenkombination "624" als weiterhin nächstliegende Trajektorie sich herausstellen kann. In diesem Fall werden die Schalterstellungen der Umschalter 14a', 14b', 14c' beibehalten.

Weiterhin wird darauf hingewiesen, dass - sofern fremdgeführte Leistungshalbleiterbauelemente 18, insbesondere Thyristoren eingesetzt werden - die Umschaltung bzw. Kommutierung auf eine andere Trajektorie, beispielsweise auf die Trajektorie mit der Zahlenkombination "623", nur dann vorgenommen werden kann, wenn die dabei abzuschaltenden Thyristoren einen Stromnulldurchgang aufweisen und damit gelöscht werden können, oder wenn durch das Umschalten auf eine andere Trajektorie eine passende Gegenspannung entsteht, die eine Kommutierung bewirkt.

Bei der vorstehend genannten, vorgegebenen Zeitdauer kann es sich beispielsweise um eine Zeitdauer von 100 $\mu$s handeln, so dass also alle 100 $\mu$s die Trajektorien der Ausgangsspannungen $u_0$ sowie eine geeignete Trajektorie bzw. der zugehörige Schaltzustand neu berechnet werden.

Die Abweichungen der jeweils berechneten Trajektorien von der Soll-Ausgangsspannung $u_0^*$ können beispielsweise mit Hilfe von mathematischen Minimierungsverfahren ermittelt werden, zum Beispiel mit dem Verfahren der kleinsten Fehlerquadrate oder dergleichen.

Es wird nunmehr eine Stromregelung für den Ausgangsstrom $i_0$ beschrieben.

Bei der Stromregelung wird ein Sollwert $i_0^*$ für den Ausgangsstrom $i_0$ vorgegeben, der von dem Umrichter 14 ausgangsseitig abgegeben werden soll. Dieser Soll-Ausgangsstrom $i_0^*$ weist die Frequenz des Energieversorgungsnetzes 16 auf und kann aus der angeforderten Leistung und der Spannung $U_{Netz}$ des Energieversorgungsnetzes 16 berechnet werden. Dieser Berechnung kann beispielsweise die Schaltung der Figur 2 zugrundegelegt werden, indem ein vollständiges elektrisches Modell dieser Schaltung erstellt wird.

Es wird für die aktuellen Schalterstellungen der Umschalter 14a', 14b', 14c' der aktuelle Ausgangsstrom $i_0(t)$ für den aktuellen Zeitpunkt t erfasst.

Eine erste Variante der Stromregelung ist in der Figur 6a dargestellt.

Wie aus der Figur 6a hervorgeht, wird dann für einen zukünftigen Zeitpunkt $t+\tau$ und für unterschiedliche Schalterstellungen jeweils ein zukünftiger Ausgangsstrom $i_{0,k}(t+\tau)$ berechnet. Bei dem zukünftigen Zeitpunkt $t+\tau$ kann es sich beispielsweise um einen Zeitpunkt handeln, der um eine Zeitdauer von 100 $\mu$s oder ein Vielfaches von 10 $\mu$s in der Zukunft liegt. Mit dem Index k werden vorstehend die unterschiedlichen Schalterstellungen gekennzeichnet. Die Berechnung der jeweiligen Ausgangsströme $i_{0,k}(t+\tau)$ kann wiederum mit Hilfe der zu der jeweiligen Schalterstellung zugehörigen Trajektorie und dem elektrischen Modell der Schaltung der Figur 2 durchgeführt werden.

In der Figur 6a sind der aktuelle Ausgangsstrom $i_0(t)$ für die aktuelle Schalterstellung und für den aktuellen Zeitpunkt t und der Soll-Ausgangsstrom $i_0^*$ dargestellt. Weiterhin sind zum Zwecke der Vereinfachung beispielhaft vier zukünftige Ausgangsströme $i_{0,k}(t+\tau)$ für den Zeitpunkt $t+\tau$ dargestellt, mit k=1...4, also mit vier unterschiedlichen Schalterstellungen der Umschalter 14a', 14b', 14c'. Es wird darauf hingewiesen, dass jeder Schaltzustand einen eigenen, zugehörigen zukünftigen Ausgangsstrom ergibt.

Es wird nunmehr derjenige zukünftige Ausgangsstrom $i_{0,k}(t+\tau)$ ermittelt, der von dem Soll-Ausgangsstrom $i_0^*$ die geringste Abweichung hat. Die Ermittlung dieser Abweichung kann dabei mit Hilfe eines Minimierungsverfahrens oder einer Gütefunktion oder dergleichen bestimmt werden. In dem vorliegenden Beispielfall der Figur 6a könnte beispielhaft der zukünftige Ausgangsstrom $i_{0,k}(t+\tau)$ als nächstliegend betrachtet werden, da dessen Stromvektor-Endpunkt in der Darstellung der Figur 6a dem Endpunkt des Stromvektors des Soll-Ausgangsstroms $i_0^*$ am Nächsten kommt.

Danach werden die Umschalter 14a', 14b', 14c' in diejenige Schalterstellung umgeschaltet, mit der der nächstkommende zukünftige Ausgangsstrom $i_{0,2}(t+\tau)$ erzeugt werden kann.

Dieses Verfahren wird fortlaufend wiederholt, beispielsweise alle 100 $\mu$s.

Eine zweite Variante der Stromregelung ist in der Figur 6b dargestellt.

In der Figur 6b werden der aktuelle Ausgangsstrom $i_0(t)$ für die aktuelle Schalterstellung und für den aktuellen Zeitpunkt t sowie der Soll-Ausgangsstrom $i_0^*$ in derselben Weise ermittelt, wie dies in der Figur 6a der Fall ist.

Dann werden in der Figur 6b ausgehend von dem aktuellen Ausgangsstrom $i_0(t)$ für unterschiedliche Schalterstellungen der Umschalter 14a', 14b', 14c' die jeweiligen zeitlichen Ableitungen $i_{0,k}'$ der Ausgangsströme $i_{0,k}$ ermittelt. Der Index k kennzeichnet dabei wieder die unterschiedlichen Schalterstellungen. Beispielhaft sind in der Figur 6b vier Ableitungen $i_{0,k}'$ dargestellt, mit k=1...4, also mit vier unterschiedlichen Schalterstellungen der Umschalter 14a', 14b', 14c'.

Es wird nunmehr diejenige zeitliche Ableitung $i_{0,k}'$ ermittelt, die möglichst exakt in die Richtung des Soll-Ausgangsstroms $i_0^*$ zeigt. Die Ermittlung dieser Abweichung kann dabei mit Hilfe eines Minimierungsverfahrens oder einer Gütefunktion oder dergleichen bestimmt werden. In dem vorliegenden Beispielfall der Figur 6b könnte beispielhaft die zeitliche Ableitung $i_{0,2}'$ als nächstliegend betrachtet werden, da deren Zeiger in der Darstellung der Figur 6b in die Richtung des Stromvektors des Soll-Ausgangsstroms $i_0^*$ zeigt.

Danach werden die Umschalter 14a', 14b', 14c' in diejenige Schalterstellung umgeschaltet, mit der derjenige Ausgangsstrom $i_{0,2}$ erzeugt werden kann, dem die nächstkommende Ableitung $i_{0,2}'$ zugeordnet ist.

Dieses Verfahren wird fortlaufend wiederholt, beispielsweise alle 100 $\mu$s.

Es wird darauf hingewiesen, dass nicht jeder Durchlauf durch eines der vorstehend erläuterten Verfahren zu einer Umschaltung der Schalterstellungen der Umschalter 14a', 14b', 14c' führen muss. In der Regel wird die Schalterstellung des aktuellen Ausgangsstrom $i_0(t)$ über mehrere Durchläufe hinweg erhalten bleibt.

Weiterhin wird darauf hingewiesen, dass die Umschaltung bzw. Kommutierung auf eine andere Schalterstellung der Umschalter 14a', 14b', 14c' im Falle der Verwendung von fremdgeführten Leistungshalbleiterbauelementen 18 nur dann vorgenommen werden kann, wenn dabei abzuschaltende Thyristoren einen Stromnulldurchgang aufweisen und damit gelöscht werden können, oder wenn durch das Umschalten auf eine andere Trajektorie eine passende Gegenspannung entsteht, die eine Kommutierung bewirkt.

**Patentansprüche**

1. Verfahren zum Betreiben eines Umrichters (14) einer Anordnung (10) zur Erzeugung elektrischer Energie, wobei die Anordnung (10) einen Generator (12) aufweist, der mit dem Umrichter (14) verbunden ist, der seinerseits mit einem Energieversorgungsnetz (16) gekoppelt ist, wobei die Frequenz der von dem Generator (12) erzeugten Spannung veränderlich ist, und wobei mit dem Umrichter (14) eine Mehrzahl von unterschiedlichen Schalterstellungen realisierbar ist, **dadurch gekennzeichnet, dass** die Ausgangsspannung ($u_0$) des Umrichters (14) in ein d, q Koordinatensystem umgewandelt wird, wobei das d, q Koordinatensystem der Frequenz ($f_{Netz}$) der Spannung des Energieversorgungsnetzes (16) zugeordnet ist, dass in dem d, q Koordinatensystem ein Sollwert vorgegeben wird, dass aus der Ausgangsspannung ($u_0$) in dem d, q Koordinatensystem für unterschiedliche Schalterstellungen des Umrichters (14) mehrere Augenblicks- oder Zukunftswerte ermittelt werden, dass in dem d, q Koordinatensystem Abweichungen zwischen dem Sollwert und den Augenblicks- oder Zukunftswerten ermittelt werden, und dass der Umrichter (14) in Abhängigkeit von den Abweichungen in eine der Schalterstellungen geschaltet wird.

2. Verfahren nach Anspruch 1, wobei die Ausgangsspannung ($u_0$) des Umrichters (14) zuerst in ein $\alpha$, $\beta$ Koordinatensystem und dann in ein d, q Koordinatensystem umgewandelt wird.

3. Verfahren nach Anspruch 1 oder 2, wobei die Ausgangsspannung ($u_0$) aus der von dem Generator (12) erzeugten Spannung ermittelt wird.

4. Verfahren nach einem der Ansprüche 1 bis 3, wobei es sich bei dem Sollwert um eine Soll-Ausgangsspannung ($u_0^*$) handelt, und wobei es sich bei den Augenblickswerten um Trajektorien der zu den Schalterstellungen des Umrichters (14) zugehörigen Ausgangsspannungen ($u_0$) handelt.

5. Verfahren nach Anspruch 4, wobei diejenige Trajektorie ermittelt wird, die der Soll-Ausgangsspannung ($u_0^*$) am Nächsten kommt.

6. Verfahren nach Anspruch 5, wobei der Umrichter (14) in diejenige Schalterstellung geschaltet wird, mit der diejenige Ausgangsspannung ($u_0$) erzeugt werden kann, die der nächstkommenden Trajektorie zugeordnet ist.

7. Verfahren nach einem der Ansprüche 1 bis 3, wobei es sich bei dem Sollwert um einen Soll-Ausgangsstrom ($i_0^*$) handelt, und wobei es sich bei den Zukunftswerten um zukünftige Ausgangsströme ($i_{0,k}(t+\tau)$) für unterschiedliche Schalterstellungen des Umrichters (14) handelt.

8. Verfahren nach Anspruch 7, wobei derjenige zukünftige Ausgangsstrom ($i_{0,k}(t+\tau)$) ermittelt wird, der dem Soll-Ausgangsstrom ($i_0^*$) am Nächsten kommt.

9. Verfahren nach Anspruch 8, wobei der Umrichter (14) in diejenige Schalterstellung geschaltet wird, mit der diejenige Ausgangsspannung ($u_0$) erzeugt werden kann, die dem nächstkommenden zukünftigen Ausgangsstrom ($i_{0,k}(t+\tau)$) zugeordnet ist.

10. Verfahren nach einem der Ansprüche 1 bis 3, wobei es sich bei dem Sollwert um einen Soll-Ausgangsstrom ($i_0^*$) handelt, und wobei es sich bei den Augenblickswerten um Ableitungen ($i_{0,k}'$) eines Ausgangsstroms ($i_0(t)$) für unterschiedliche Schalterstellungen des Umrichters (14) handelt.

11. Verfahren nach Anspruch 10, wobei diejenige Schalterstellung ausgewählt wird, deren Zeiger der Ableitung ($i_{0,k}'$) dem Soll-Ausgangsstrom ($i_0^*$) am Nächsten kommt.

12. Verfahren nach Anspruch 11, wobei der Umrichter (14) in diejenige Schalterstellung geschaltet wird, mit der diejenige Ausgangsspannung ($u_0$) erzeugt werden kann, die der nächstkommenden Ableitung ($i_{0,k}'$) des Ausgangsstroms ($i_0(t)$) zugeordnet ist.

13. Verfahren nach einem der vorstehenden Ansprüche, wobei der Sollwert in Abhängigkeit von dem Energieversorgungsnetz (16) vorgegeben wird.

14. Verfahren nach einem der vorstehenden Ansprüche, wobei die Frequenz der von dem Generator (12) erzeugten Spannung größer ist als die Frequenz der Spannung des Energieversorgungsnetzes (16).

15. Verfahren nach einem der vorstehenden Ansprüche, wobei der Umrichter (14) eine Mehrzahl von fremdgeführten oder selbstgeführten Leistungshalbleiterbauelementen (18) aufweist, beispielsweise IGBTs (IGBT = insulated gate bipolar transistor) oder IGCTs (IGCT = integrated gate commutated thyristor) oder Thyristoren, und wobei bei fremdgeführten Leistungshalbleiterbauelementen (18) eine Umschaltung des Umrichters (14) in eine andere Schalterstellung nur dann vorgenommen werden kann, wenn dabei abzuschaltende Leistungshalbleiterbauelemente (18) einen Stromnulldurchgang aufweisen, oder wenn durch das Einschalten eines Leistungshalbleiterbauelements (18) eine Gegenspannung erzeugt wird.

16. Anordnung (10) mit einem Generator (12), der mit einem Umrichter (14) verbunden ist, der seinerseits mit einem Energieversorgungsnetz (16) gekoppelt ist, wobei die Frequenz der von dem Generator (12) erzeugten Spannung veränderlich ist, und wobei mit dem Umrichter (14) eine Mehrzahl von unterschiedlichen Schalterstellungen realisierbar ist, **dadurch gekennzeichnet, dass** ein Steuergerät vorhanden ist, das dazu geeignet ist, das Verfahren nach einem der vorstehenden Ansprüche auszuführen.

17. Anordnung (10) nach Anspruch 16, wobei der Generator (12) mit einem Energieerzeuger (11) gekoppelt und von diesem angetrieben ist, insbesondere von einer Gas- oder Wasserkraftturbine oder von einer Windkraftanlage.

18. Anordnung (10) nach Anspruch 16 oder 17, wobei es sich bei dem Generator (12) um einen n-phasigen Polygon-Generator und bei dem Umrichter (14) um einen Direkt-Umrichter oder Matrix-Umrichter handelt.

EP 2 477 321 A2

**Fig. 1**

10  11  12  14  15  16

**Fig. 2**

$U_{g1}$ $R_g$ $L_g$  $U_{g2}$ $R_g$ $L_g$  $U_{g3}$ $R_g$ $L_g$  $U_{g4}$ $R_g$ $L_g$  $U_{g5}$ $R_g$ $L_g$  $U_{g6}$ $R_g$ $L_g$  $U_{gn-2}$ $R_g$ $L_g$  $U_{gn-1}$ $R_g$ $L_g$  $U_{gn}$ $R_g$ $L_g$  12

$I_{g1}$  $I_{g2}$  $I_{g3}$  $I_{g4}$  $I_{g5}$  $I_{g6}$  $I_{gn-2}$  $I_{gn-1}$  $I_{gn}$

18

1 2 3 4 5 6 n-2 n-1 n    1 2 3 4 5 6 n-2 n-1 n    1 2 3 4 5 6 n-2 n-1 n

14a    14b    14c    14

$U_o$

$I_{o,r}$  $R_{load}$  $L_{load}$  $U_{Netz}$

$I_{o,s}$  $R_{load}$  $L_{load}$  $U_{Netz}$

$I_{o,t}$  $R_{load}$  $L_{load}$  $U_{Netz}$

Fig. 3

Fig. 4

Fig. 5a

Fig. 5b

EP 2 477 321 A2

q

$i_o^*$

$i_{o,3}(t+\tau)$

$i_{o,2}(t+\tau)$

d

$i_{o,4}(t+\tau)$

$i_o(t)$

$i_{o,1}(t+\tau)$

# Fig. 6a

q

$i_o^*$

d

$i_{o,2}$

$i_{o,3}$

$i_o(t)$

$i_{o,1}$

$i_{o,4}$

# Fig. 6b